# EUROPEAN PATENT APPLICATION

(11) **EP 3 699 020 A1**
(43) Date of publication of application: **26.08.2020**
(21) Application number: 20159143.5
(22) Date of filing: 24.02.2020
(51) Int. Cl.: B60L 53/12, B60L 53/66

(54) **WIRELESS BATTERY CHARGING SYSTEM FOR AUTOMATIC GUIDED VEHICLES**

(30) Priority: 22.02.2019 GB 201902471
(71) Applicant: Arrival Limited, London W14 8TS (GB)
(72) Inventor: KOZLOVSKY, Vitaly, London W14 8TS (GB); KOZLENOK, Aleksandr, London W14 8TS (GB); PETRANEVSKY, Igor, London W14 8TS (GB)
(74) Representative: Jarrett, Daniel Phillip

(57) **Abstract**

An inductive wireless charging system for a plurality of automatic guided vehicles - AGVs (100, 353) includes an AGV control system and wireless energy transmitters (355) that are configured to emit electromagnetic power to the AGV. The AGVs can be multi-wheeled controlled robot vehicles which are battery operated and each have a receiver coil on a lower portion. The AGVs can be controlled to move throughout a facility such as a factory (421). When the AGVs (100, 353) move over the wireless energy transmitters (355), electromagnetic power is transmitted to the receiver coils which is converted into electrical energy by the AGVs to charge the AGV batteries.

## Description

### Background

In robotized manufacturing, systems must be configured with consideration of the physical operations of the technological process, product design and assembling optimizations. Robotized manufacturing can include automatic guided vehicles (AGVs) which are portable robots that can follow markers or wires in the floor, or use vision, magnets, or lasers for navigation. AGVs are most often used in industrial applications to move materials around a manufacturing facility or warehouse. AGV systems can include multiple battery powered AGVs that navigate along pre-defined guided paths. AGVs can navigate in the facility using several guidance technologies including floor-surface mounted magnetic tape or bars, lasers, optical sensors, and magnet/gyroscope based inertial guidance. These guidance technologies make it easy to change the routes of the AGVs and expand the AGV system in response to facility changes for a flexible and scalable material handling solution. Robotized manufacturing requires a high degree of automation and flexible manufacturing systems; requirements of automated logistics and delivery methods within a workshop include: low-cost, high reliability, flexibility of the AGV system.

AGVs use electrical power from batteries. The batteries must be re-charged or replaced to let the devices operate normally. Sometimes it is undesirable to unexpectedly brake the pre-defined sequence of operations of the manufacturing process to stop or replace the AGV for charge station docking. The battery replacement also takes time, requires additional equipment and battery reserve, and construction of the AGV should facilitate quick battery withdrawal and loading. What is needed are improved AGVs which can function independently to charge themselves wirelessly so that manufacturing operations do not stop during the AGV charging.

### Summary of the Invention

The present invention is directed to a system and method for providing an inductive wireless charging system for a plurality of AGVs. The AGVs can be multi-wheeled controlled robot vehicles which are battery operated and have a receiver coil on a lower portion which is used to charge an internal battery. The AGVs can be controlled to move throughout a facility such as a factory that has a network of wireless energy transmitters consisting of transmitter coils that are coupled to a power supply and mounted in the floor or on an elevated surface.

The AGVs can operate autonomously and/or communicate with an AGV controller. The AGVs can be configured or controlled to move over the wireless energy transmitters so that the receiver coils are positioned over the transmitter coils. The wireless energy transmitters can be configured to emit electromagnetic power when the battery of the AGV that is over the energy transmitter needs to be charged. In other embodiments, the wireless energy transmitters can be configured to emit electromagnetic power to the AGV that is over the energy transmitter and an internal battery management system can control the charging power that is applied to the AGV battery. More specifically, the AGV controller can identify the battery charge of the AGVs and turn on the wireless energy transmitters that the AGVs are over. Alternatively, the AGVs can emit signals indicating that the battery needs to be charged and the wireless energy transmitter(s) directly under an AGV can emit electromagnetic power.

In an embodiment, the AGVs can function independently or in collaboration with multiple AGVs which can be coupled with linkages, platforms or other coupling mechanisms. In an embodiment, the wireless energy transmitters can be placed adjacent to each other in a two dimensional array covering a designated charging area. The AGV assemblies can be moved to these larger charging areas where wireless energy transmitters are located under all of the AGVs in the assembly and the batteries can all be wirelessly charged simultaneously. In an embodiment, the paths of the AGVs can be analyzed and the wireless energy transmitters can be placed in the most commonly traveled areas so that the AGVs can be controlled to charge the batteries as the AGVs travel through a factory without requiring the AGVs to stop for the sole purpose of battery charging.

In an embodiment, the wireless energy transmitters can be on an upper surface of an elongated elevated surface in an AGV storage area. The wheels of the AGVs can straddle the width of the elongated elevated surface and a plurality of AGVs can be moved to adjacent positions on the charging surface. The elevated wireless energy transmitter surface reduces the distance between the transmitter coils and the receiver coils of the AGVs which can improve the energy transmission efficiency.

In an embodiment, there is provided a charging system comprising: a plurality of AGVs, each of the plurality of AGVs comprising a plurality of wheels coupled to a frame, a battery and a first receiver coil on a lower portion of the frame; a plurality of charging coils coupled to a power supply; and an AGV control system for controlling the movements of the plurality of AGVs; wherein the AGV control system is configured to direct each of the plurality of AGVs to adopt a position relative to at least one of the charging coils wherein the receiver coil is operable to receive electromagnetic waves emitted from the charging coils, and wherein the receiver coils are configured to convert the received electromagnetic waves into electrical power for charging the batteries.

In an embodiment, there is provided a charging system comprising: a plurality of automatic guided vehicles (AGVs), each of the plurality of AGVs includes a plurality of wheels coupled to a frame, a battery and a first receiver coil on a lower portion of the frame; a plurality of charging coils coupled to a power supply; and an AGV control system for controlling the movements of the plurality of AGVs; wherein the AGV control system directs each of the plurality of AGVs to move the receiver coil over the charging coil, the charging coils emit electromagnetic waves which are received by the receiver coils and converted into electrical power for charging the batteries.

### Brief Description of the Drawings

FIG. 1 illustrates a block diagram of an embodiment of wireless power transfer to a battery of an AGV.
FIG. 2 illustrates a front view of an embodiment of an AGV.
FIG. 3 illustrates a bottom view of an embodiment of an AGV with receiver coils in a longitudinal configuration.
FIG. 4 illustrates a front view of an embodiment of an AGV with receiver coils in a longitudinal configuration.
FIG. 5 illustrates a bottom view of an embodiment of an AGV with receiver coils in a transverse configuration.
FIG. 6 illustrates a front view of an embodiment of an AGV with receiver coils in a transverse configuration.
FIG. 7 illustrates a perspective view of an AGV assembly that is being assembled by a robot.
FIG. 8 illustrates a top view of an AGV assembly having multiple AGVs coupled by linkages.
FIG. 9 illustrates a perspective exploded view of an embodiment of a receiver coil.
FIG. 10 illustrates a top view of an embodiment of a wireless energy transmitter.
FIG. 11 illustrates an exploded perspective view of an embodiment of a wireless energy transmitter.
FIG. 12 illustrates a perspective view of an AGV storage area having a plurality of wireless energy transmitters on raised surfaces.
FIG. 13 illustrates a perspective view of a floor surface having a plurality of wireless energy transmitters.
FIG. 14 illustrates a top view of a factory having multiple areas with a plurality of wireless energy transmitters adjacent to an assembly area.

### Detailed Description

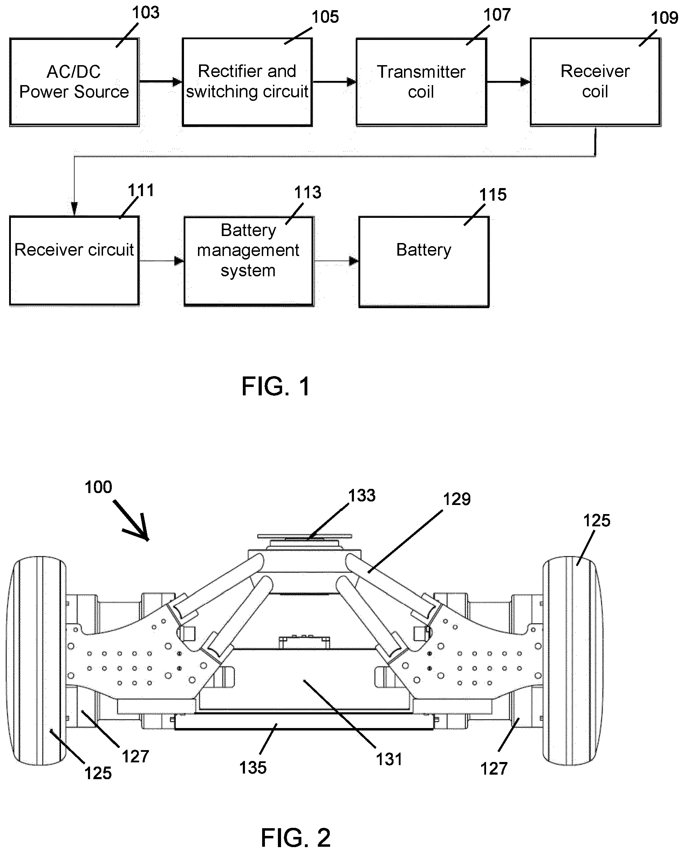

The present invention is directed to provide wireless charging system and apparatus for AGVs which are wheeled robots that are movable in all directions. In different embodiments, the disclosed product might be effectively used in many other applications and might have a variety of implementations. With reference to FIG. 1, the inventive system can include AGVs that have a wireless inductive charger schema. Electrical power is provided by an AC/DC power source 103 which is coupled to a rectifier and switching circuit 105 which drives a transmitter coil 107 which can be mounted on a floor surface upon which the AGVs travel, or another surface upon which the AGVs can travel. One part of the AGV charging system is an energy receiver coil 109 which can be mounted inside the AGV such as on the lower surface of the AGV body. The receiver coil 109 can be coupled to a receiver circuit 111 which can convert the electromagnetic waves into electrical power that is transmitted through a battery management system 113 to a battery 115 on the AGV. The inductive coupling of the transmitter coil 107 and receiver coil 109 compose the transformer, which allows transfer of the electrical power used to charge the AGV battery when they are in close physical proximity.

With reference to FIG. 2 a front view of an embodiment of an AGV 100 is illustrated. The AGV 100 can have two wheels 125 which are driven by motors 127 which are coupled to an AGV frame 129. In an embodiment, the motors 127 can be Permanent Magnet Synchronous Motors (PMSMs) or any other suitable motor. The AGV frame 129 can have a connection unit 133 and an open lower portion which can hold a power pack 131 which can have a receiver coil on a lower surface. The upper center portion of the AGV 100 can be a connection unit 133 which can be a load bearing hitch which can be used to couple the AGV 100 to trailers, linkages to other AGVs 100, platforms for supporting objects, etc.

Downward forces can be transmitted through the connection unit 133 and the frame 129 to the wheels 125. In an embodiment, the downward force on the connection units 133 can result in an outward side stretching force through the frame 129 to the wheels 125. One means for compensating for the negative effects of the side stretching of the frame 129 can be to incorporate a lower link 135 coupled to the main frame 129, which functions as a structural element in the central lower portion of the frame that is rigid in tension and resists elongation of the frame 129 and prevents outward side stretching. In addition to being a structural element of the frame 129, the lower link 135 can be a core of the receiver coil.

The motors 127 are powered by rechargeable batteries in the power pack 131 and controlled by a motor controller. The motor controllers can include a main controller circuit and electrical power switching mechanisms. For example, the motor controllers can include a general purpose central processing unit (CPU) such as an Arduino controller and general purpose input/output (GPIO) mounted drivers.

The CPU might serve as a computational resource for AGV localization and navigation algorithms. The AGV 100 can also include communication means with wireless networks. For example, the communications mechanism can be a radio frequency (RF) device such as a Wi-Fi mechanism or any other RF communications transceiver system. In an embodiment, an AGV control system can transmit navigational controls to a plurality of AGVs 100 and each of the AGVs 100 can transmit location information back to the AGV control system for feedback for the locations of the plurality of AGVs 100.

The power pack 131 of the AGV 100 may include batteries and a battery monitoring system. Because the batteries can have a heavy weight, they can be mounted below the center of rotation or the rotational axis of the wheels 125. The weight of the batteries can help to passively keep the AGV 100 in the upright position. The batteries can be charged by moving the AGV 100 over a charging station so that the batteries can be wirelessly charged.

The connection unit 133 can be mounted to the center of the upper surface of the AGV frame 129. The connection unit 133 can be a rotational coupling which can rotate freely about the vertical Z axis. The connection unit 133 can be coupled to other objects and used as a towing connection for the AGV 100.

The motors 127 can be coupled to cooling plates which can be heat sinks which can dissipate heat and keep the motors 127 and other AGV components within the optimum working temperature. The cooling plate can include a plurality of fins which provide a larger exposed area for convection heat transfer from the solid metal surfaces to the ambient air. The cooling plates can function as passive heat exchangers. In other embodiments, cooling of the AGV components can be improved with an active cooling system which can include fans which can circulate cooler air over the fins of the cooling plates.

The electric motors 127 can be connected to the wheels 125 directly or be coupled to a planetary gear assembly which is coupled to the wheels 125. In an embodiment, the planetary gear assembly can consist of sun and planet gears mounted so that the center of the planet gear revolves around the center of the sun gear. The planet and sun gears mesh so that their pitch circles roll without slip. A planetary gear train can be assembled so that the planet gear rolls on the inside of the pitch circle of a fixed, outer gear ring, or ring gear, sometimes called an annular gear. In this case, the curve traced by a point on the pitch circle of the planet is a hypocycloid. The planetary gearing can reduce the rotational velocity of the electric motors 127 transmitted to the wheels 125. In an embodiment, the AGV 100 can have a brake system which can have various implementations. For example, in an embodiment, the AGV 100 can have an integrated vision or object detection mechanism. When an imminent collision is detected, the AGV 100 can actuate a brake mechanism to stop the movement of the AGV 100 immediately.

When the proposed dual-wheeled AGV robot platform is used as a single unit, the vertical position must be guaranteed. Two types of stabilization are used: passive and active. Passive stabilization is ensured by the device composition, when the center of mass of the robot is below the axis of the wheels, which allows it to move with relatively small acceleration (the value of which depends on the particular implementation) with a load, which does not cause a significant shift of the center of mass (the value of which depends on the implementation, and should not be more than the weight of the mass below the axis) without causing the robot to overturn. To assure passive stabilization, the moment of inertia of the robot must be higher than the moment on the driving wheels, which allows the robot to be a pendulum, and its resting state is determined by the position of the center of mass.

Active stabilization is necessary when a payload shifts the center of mass of the system above the axis of the driving wheels, thereby creating a system of the reverse pendulum. The system is balanced by impulse control of the driving wheel motors, and the data on the position of the robot in space is determined by means of an inertial measurement unit (IMU). In some implementations, the gyroscopic module might be used for this purpose. In cheaper implementations, the torque is controlled by balancing the driving wheels' acceleration.

In an embodiment, the AGV 100 can have a stabilization system which can be part of the motor controller. The stabilization system can include accelerometers which are used to detect the orientation of the AGV 100. For example, the accelerometers can be mounted in an X axis (horizontal forward) and Z axis (vertical) orientations to detect the vertical or upright angle of the AGV 100. If the vertical angle of the AGV 100 is not within a predetermined range of angles, the motor controllers can adjust the movement of the wheels 125 to correct the vertical upright angle of the AGV 100 and prevent the AGV 100 from flipping over. For example, the controller can require the AGV 100 to be within 10 or less degrees of 90 degrees upright. If the AGV 100 is rotated too far back or forward about the y-axis (horizontal parallel with axis of rotation of wheels 125) while the AGV 100 is moving, the motor controller(s) can adjust the rotational speeds of the motors 127 and wheels 125 so that the AGV 100 will return to an upright position with the frame 129 in a horizontal position within the predetermined angle range.

The AGV 100 might also be gyrostabilized and have a gyroscope which can be a rotating disk coupled to a gyroscope motor. The gyroscope can consist of any mass, typically a disc or wheel coupled to a motor. The gyroscope can be mounted around a portion of the frame. The rotating disc can maintain its orientation and can automatically counteract unwanted rotary movements of the frame 129 and AGV 100 about the vertical Z axis. In other embodiments, the gyroscope can be mounted within the frame 129.

In addition to or using an alternative mechanism to balance the AGV 100, tilt sensors and/or gyroscopic sensors can detect the angle and rotational movement of the AGV 100. The tilt sensors and gyroscopic sensors can communicate with a processor controller which can control motors 127 that rotate the wheels 125 which are driven forward or backward as needed to return the pitch of the AGV 100 to an upright position. In some embodiments, the AGV 100 can use brushless DC electric motors coupled to each wheel which are powered by lithium-ion or other rechargeable batteries in the power pack 131. The AGV 100 can detect the vertical or upright angle of the AGV 100. If the vertical angle of the AGV 100 is not within a predetermined range of angles, the motor controller can adjust the movement of the wheels to correct the vertical angle of the AGV 100 and prevent the AGV body or frame 129 from flipping over. For example, in an embodiment, the controller can require the AGV 100 to be within 10 degrees of 90 degrees upright. The accelerometer sensors can be configured in a vertical and horizontal orientation and the outputs of the vertical and horizontal accelerometer sensors 81 can be used to determine the vertical angle of the AGV 100. If the AGV 100 is leaning back too far while the AGV 100 is moving, the motor controller can slow the motors 127 and wheels 125 so that the deceleration force will cause the AGV 100 to rotate about the axis of the wheels 125 to a more upright position back to be within the predetermined vertical angle range.

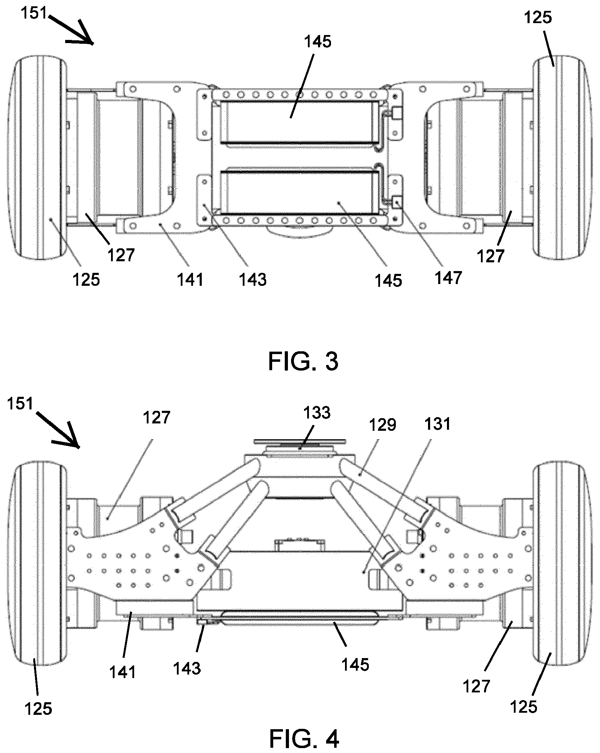

FIG. 3 illustrates a bottom view and FIG. 4 illustrates a front view of an embodiment of an AGV 151 with receiver coils 145 configured in a longitudinal orientation on the frame 129. With reference to FIG. 3, the AGV 151 can include a battery mount 141, a transformer core 143, a receiver coil 145 and a power output 147. The battery mount 141 can be a structure which can secure the power pack 131 to the frame 129 of the AGV 151. The transformer core 143 and the receiver coil 145 in a longitudinal orientation with the direction of the receiver coil 145 wires on the upper and lower surfaces aligned with the direction of the AGV 141. The transformer core 143 and the receiver coil 145 can be mounted to a planar surface on a lower surface of the AGV 151. The receiver coil 145 can be coupled to a power output 147 which as discussed above with reference to FIG. 1, directs power through a receiver circuit and a battery management system to the battery. As discussed above, the transformer cores 143 can be both functional electromagnetic components of the receiver coil 145 as well as a structural component of the frame 129.

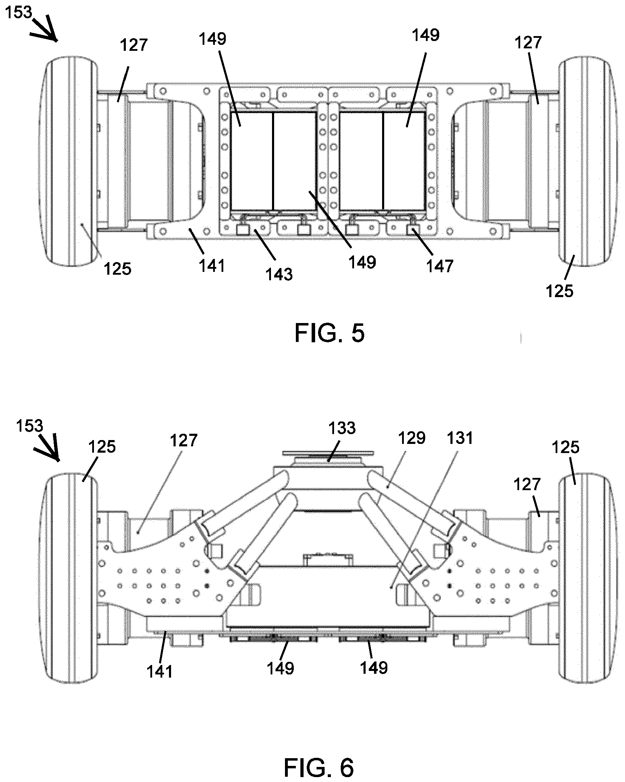

FIG. 5 illustrates a bottom view and FIG. 6 illustrates a front view of an embodiment of an AGV 153 with receiver coils 149 configured in a transverse orientation on the frame 129 with the wires of the receiver coils 149 aligned across the width of the AGV 153. With reference to FIG. 5, the AGV 153 can include a battery mount 141, a transformer core 143, receiver coils 149 and a power output 147. The battery mount 141 can be a structure which can secure the power pack 131 to the frame 129 of the AGV 153. The transformer core 143 and the receiver coils 149 can be mounted to a planar surface on a lower surface of the AGV 153 in a transverse orientation with the wires of the receiver coils 149 running around the Y axis parallel to the axis of rotation of the wheels 125. The receiver coils 149 can be coupled to a power output 147 which, as discussed above with reference to FIG. 1, directs power through a receiver circuit and a battery management system to the battery.

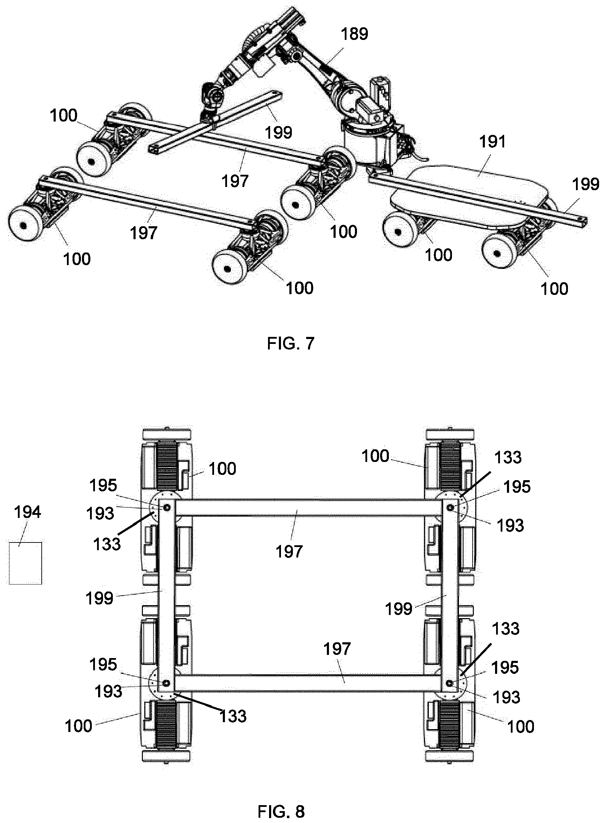

With reference to FIGS. 7 and 8, in other embodiments, multiple AGVs 100 with wireless battery charging can be coupled with platforms 191 or linkages 197, 199. The AGVs 100 can be controlled to move to an assembly location where a robot 189 can connect the AGVs 100 to assemble the robotic transportation apparatus. In the illustrated example, the AGVs 100 are positioned in close proximity to the robot 189, and the linkages 197, 199 have been delivered to the robot 189 on a platform 191 mounted on two AGVs 100. The robot 189 has placed two linkages 197 on the AGVs 100. The robot 189 is in the process of placing the front width linkage 199 on the front ends of the length linkages 197. The rear width linkage 199 is still on the platform 191 and will be subsequently coupled to the two rear AGVs 100.

In this embodiment, four AGVs 100 are coupled to two length linkages 197 and two width linkages 199. The four linkages 197, 199 can have vertical holes 193 at the end portions of the linkages 197, 199. Cylindrical rods 195 can be placed through the vertical holes 193 and into hole couplings in the connection unit 133 at the upper center of the AGV 100. In an embodiment, the vertical holes 193 can be configured with bushings or bearings which allow the cylindrical rods 195 to freely rotate within the vertical holes 193 with low friction or rotational resistance. The cylindrical rods 195 can be placed in holes in the top of the AGVs 100 and the cylindrical rods 195 can be releasably attached to the AGVs 100.

In the illustrated configuration, the two length linkages 197 and two width linkages 199 are in a rectangular configuration. The angles between the length linkages 197 and width linkages 199 can be 90 degrees. As the robotic transportation apparatus moves, the AGV controller 194 can be a control mechanism which has a processor and a radio frequency (RF) transmitter or transceiver which can communicate with the AGVs 100 and control the positions of the coupled AGVs 100 to maintain the rectangular or parallelogram shape of the four linkages 197, 199 throughout the movement routes of the coupled AGVs 100. In other embodiments, the motor controllers can communicate with each other and maintain the rectangular or parallelogram shape of the two length linkages 197 and two width linkages 199 throughout the movement routes of the coupled AGVs 100.

There can be positional variations as the AGVs 100 move such that the angles between the two length linkages 197 and two width linkages 199 might vary between 0 and 180 degrees. Although, two length linkages 197 and two width linkages 199 are illustrated in parallelogram shapes, in other embodiments, any number of AGVs 100 can be coupled to any number of linkages which can be combined into any shaped assembly to provide specific transportation functions. The shape of the linkage assemblies can be specifically designed for the product being transported. For example, for a long object like a pipe, several AGVs can be configured under the single narrow and long linkage assembly. Alternatively, the linkages can be configured to provide wider linkage assemblies with multiple AGVs distributed across the width of the linkage assemblies.

With reference to FIG. 8, the four linkages 197, 199 in the rectangular configuration can provide a support platform for a container structure having a rectangular planar base which can be placed on the four linkages 197, 199. Support for the weight of the container structure can be distributed between the four AGVs 100. In other embodiments, linkages can be used to combine any number of AGVs 100 to perform the transportation. The AGV controller 194 can control the movements of the plurality of AGVs 100 and the shape of the linkages 197, 199 can be specifically designed for the product being transported. For example, the AGV controller 194 can direct several AGVs 100 to form a single narrow and long platform. In other embodiments, wider platforms can be coupled to AGVs 100. Multiple AGV assemblies' linkages and platforms can be connected in various configurations. For example, for heavy and large object transportation or bad road surface conditions, bigger assemblies of AGVs might be used. It can be desirable to have large area AGV 100 recharging locations where all of the AGVs 100 of a transportation assembly can be recharged without disassembling the multiple AGV assemblies.

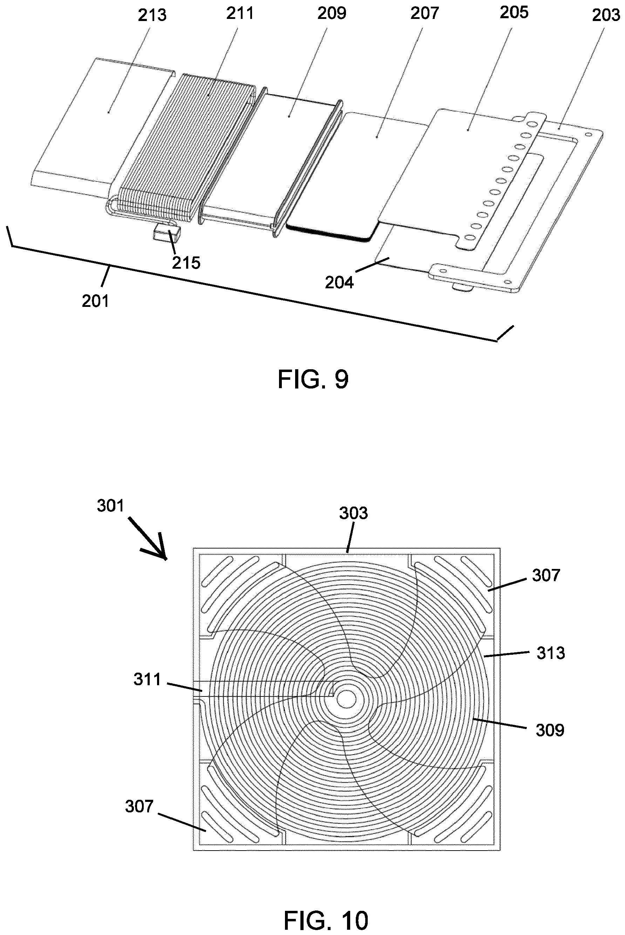

With reference to FIG. 9, a disassembled view of an embodiment of a receiver coil assembly 201 of an AGV is illustrated. In this embodiment, the receiver coil assembly 201 can include a transformer core mount plate 203, a lower layer 204 and an upper layer 205 of the assembled pack of the solenoid coil core; a main layers solenoid core 207, a cartridge 209 for copper receiver wire windings, a receiver coil 211, receiver shielding 213, and output 215. The transformer core mount plate 203 is a mounting structure that holds the receiver coil assembly 201 to a bottom surface of the AGV frame. The lower layer 204 and the upper layer 205 of the assembled pack of the solenoid core 207 can have a fastening surface that can be coupled to the transformer core mount plate 203. For example, in an embodiment the lower layer 204 and the upper layer 205 can have mounting holes which can allow fasteners to secure the lower layer 204 and the upper layer 205 to the mount plate 203. The main layers of the solenoid core 207 can be a plurality of layers of ferromagnetic material that form the assembled package of the magnetic circuit. The cartridge 209 can be an electrically insulative material such as plastic that can be placed on the upper and lower surfaces of the solenoid coil core 207, effectively surrounding the solenoid coil core 207 and separating it from the receiver coil 211. The cartridge 209 can have flanges on the side edges which can hold the receiver coil 211 over the solenoid coil core 207.

In an embodiment, the receiver coil 211 can be made from a conductive wire such as copper which can have an insulative outer coating. The wire can be flat or round in cross section and the wire can have a cross sectional area of about 1.2 mm². In other embodiments, the coil wire can have a different cross sectional area. The ends of the receiver coil 211 can be coupled to an output 215 which can be coupled to a connection receiver circuit (not shown). The receiver shielding 213 can be a metal screen which is placed over the receiver coil 211. FIG. 7 illustrates an exemplary embodiment of a receiver coil 201. In other embodiments, the receiver coil 201 can have any other geometric shape as illustrated above in FIGS. 3 and 5.

FIG. 9 illustrates a perspective view of an embodiment of a single receiver coil 211. Each AGV can have a plurality of receiver coils 211 which can be connected in series and/or in parallel to achieve different electrical characteristics. For example, in an embodiment, each receiver coil 211 can produce 26 volts when exposed to a wireless energy transmitter. If two receiver coils 211 are coupled in series, the combined voltage output can be 52 volts. Alternatively, a plurality of receiver coils 211 can be configured in a parallel manner which can result in a 26 volt output with a higher electrical current output.

With reference to FIG. 5, the AGV 153 has four receiver coils 149 in a parallel transverse orientation. The receiver coils 149 can be configured with the two receiver coils 149 on the left side coupled in parallel and the two receiver coils 149 on the right side also coupled in parallel. The two pairs of receiver coils 149 can then be coupled in series. If the output voltage for each receiver coil 149 is 26 volts, then the output of this receiver coil assembly can be 52 volts which can be fed to the battery management system for charging the battery of the AGV 153.

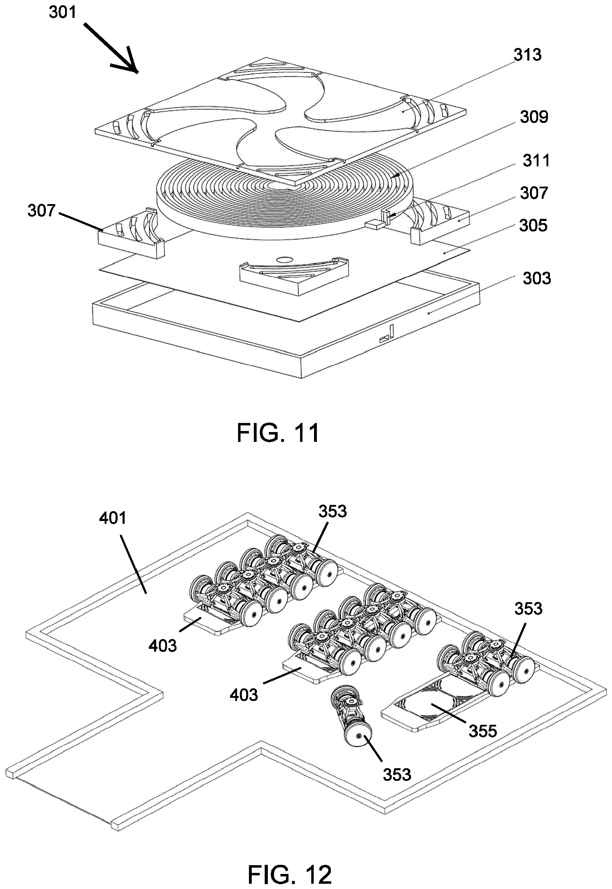

With reference to FIG. 10, a top view is illustrated (FIG. 11 illustrates an exploded view) of an embodiment of a wireless energy transmitter assembly 301 which can include a subframe 303, a metal shield 305, cooling systems 307, a transmitter coil 309, a transmitter coil output 311, and a cover 313. The subframe 303 can have sidewalls which can form a perimeter of the wireless energy transmitter assembly 301 which surround the assembly components. The metal shield 305 can form a lower surface of the wireless energy transmitter assembly 301. Cooling systems 307 can be placed on the metal shield 305 at each corner of the subframe 303 around the transmitter coil 309 which is placed in the center of the subframe 303. The transmitter coil 309 can be formed from an elongated conductive material such as a flat wire which is coiled in a spiral pattern with one end on the outer perimeter of the transmitter coil 309 coupled to the transmitter coil output 311 and the opposite end at the center of the transmitter coil 309 coupled to a conductor that is also coupled to the transmitter coil output 311. In an embodiment, the inductive part of the transmitter coil 309 can be a copper stripe wire which has a cross section of 8 x 2.5 mm forming a spiral. In other embodiments, the inductive part of the transmitter coil 309 can be made of a different conductive material having different cross sections and geometric shapes.

In an embodiment, the cover 313 can be made of a material which is transparent to electromagnetic waves such as glass, plastic, or other suitable materials. In different embodiments, various types of cooling systems can be used with the wireless energy transmitter assembly 301 including convection with air or liquid cooling systems or conduction cooling systems which can use heat sinks in direct physical contact with the transmitter assemblies. The transmitting module wireless energy transmitter assembly 301 is designed in the form of a flat slab, which might be mounted into the factory floor surface.

The transmitter coil output 311 is connected to an electrical power source so that electrical power is applied to the transmitter coil 309. The wireless power system consists of the wireless energy transmitter assembly 301 connected to a source of electrical power which converts the power to a time-varying electromagnetic field and power is radiated as radio waves. When the AGV is positioned in close proximity to the transmitter coil 309, the AGV can receive the electromagnetic power from the wireless energy transmitter assembly 301. The electromagnetic field power is transmitted to one or more receiver coils described above which receive the power and convert it back to DC electric current which is used to charge the batteries on the AGV.

The described wireless charging does not require any direct mechanical contact. The distance between the receiver coils on the bottom of the AGVs and the transmitter assembly of the charging system can be about 50 mm or less which can result in a charging efficiency of more than 67%. A 50 mm gap wireless power transmission distance is considered for the case when the transmitting part is flush with the upper floor surface level. However, in other embodiments, the transmitter coil might be mounted higher than the floor surface which can result in more efficient power transmission. Depending on the gap between the receiver and transmitter coils, the efficiency of the charger can range from about 35% to 97%. More power could be applied to transmitter assembly to increase the received electrical current transmission from the electricity source to the AGVs. However, increasing the power of the charger transmitter coils results in more heat energy which must be dissipated which can be hazardous to humans. For example, high power wireless chargers of more than 500 watts should be located in an area where humans cannot be exposed to heat. For factories that have fully robotized manufacturing without human assistance, this requirement may not be a problem. However, in a robotized factory that includes human activities, the main charging cycle of logistic AGV robots can take place in a buffer zone such as an AGV storage area. To increase the charging efficiency, the charging transmitter coils can be placed on pedestals so that the gap between transmitting modules on the factory floor and the receiving modules on the AGVs can be reduced to 10 mm.

With reference to FIG. 12, an embodiment of a storage area 401 for AGVs 353 with transmitter coils 355 on the upper surfaces of an elongated raised charging surface 403 is illustrated. In an embodiment, a factory can have a plurality of AGVs 353 which can be individually controlled. The AGVs 353 can wait in the storage area 401 before being controlled to perform robotic tasks in a factory or other facility such as a hospital. While the AGVs 353 are waiting in the storage area 401, the AGVs 353 are parked over the elongated raised charging surfaces 403. The width of the raised charging surfaces 403 can be slightly narrower than the distance between the inner surfaces of the wheels of the AGVs 353, and the ends of the raised charging surfaces 403 can be tapered. When the AGVs 353 move to the storage area 401 the wheels of the AGV 353 can be on opposite sides of the raised charging surfaces 403 and as the AGVs 100 move over the raised charging surfaces 403 the tapered ends can guide the AGVs 100 into alignment with the receiver coils directly over the transmitter coils 355. When positioned as described, the receiver coils can be in close proximity (10 - 30 mm) over the transmitter coils 355. The wireless energy transmission efficiency can be inversely proportional to the distance between the transmitter coils 355 and the receiver coils, so it can be desirable for the receiver coils of the AGVs 353 to be in close proximity to the transmitter coils 355.

In an embodiment, the AGVs can be scheduled for battery recharging as part of their operating schedule. The charging time can be predicted based upon a known wireless energy transfer power and efficiency, and the AGVs' battery capacity. For example, in an embodiment, the charging station transmitter coils 355 can each have a power output of 1.56 kW. If the AGV robot battery capacity is 1.4 kWh, then the estimated time required to fully charge the AGV battery can be about 1 hour or less if the wireless power transfer efficiency is greater than or equal to 93%. As discussed above with reference to FIG. 1, the AGVs can have battery management systems which can control the charging rate and measure the charge of the battery. The battery life can be damaged by overcharging or over discharging. The AGVs can have data transmitters which can transmit the battery charge information to an AGV controller which can control the operation of the AGVs based upon their battery charge information. For example, scheduling AGVs with full charges for high work load tasks and AGVs with lower charges for lower power tasks and recharging.

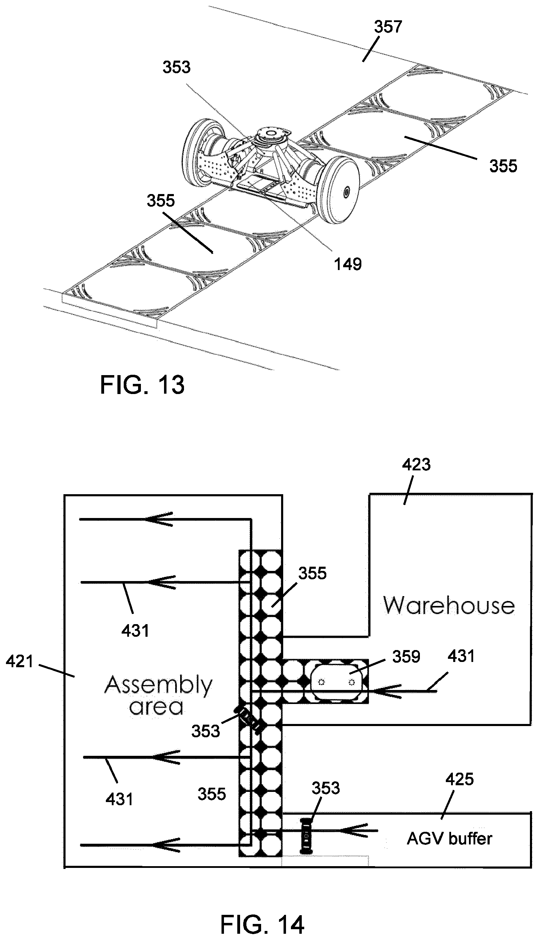

In other embodiments, the described wireless chargers can be mounted in the floor along the AGV route so that the AGV can recharge the battery while performing normal robotic tasks or while the AGV is idle or performing unloaded movements. An embodiment of the electromagnetic track is shown in FIG. 13 with a plurality of power transmitter coils 355 mounted in a linear configuration in the floor 357. The AGV 353 can move so that the receiver coil 149 is over the transmitter coils 355 and receive electromagnetic power. Since the receiver coils are farther above the transmitter coils 355 the charging efficiency may not be as high as the raised charging surfaces. However, battery charging can be performed while the AGVs are performing scheduled robotic tasks rather than only in a stationary storage area.

In an embodiment, the transmitter coils 355 in a charging track can be placed along the most often visited routes on the floor 357. The required lengths of the charging areas for the transmitter coils 355 and expected battery charging along a known AGV 353 route can be calculated so the AGV 353 does not need to stop for charging. For example, if the AGV battery lasts for an average of two hours of operation and the charging time for the battery is 40 minutes over floor mounted transmitter coils 355, then one third of the AGV's 2 hour route can be covered by transmitting coils 355 to maintain the battery charge on the AGV 353.

In other embodiments the AGVs that have low battery charges could be directed by a central AGV control system or the AGV's internal software to move to an area with (charger) transmitter coils 355. The AGVs can be instructed to perform operations only in this area until batteries are charged. Once the batteries are charged, the AGVs can inform the AGV control system and/or internal software of the charged battery status. The AGV control system or the AGV's internal software can then cause the AGV to leave the charging area to perform other tasks. For example, part of the workshop or factory could be fully covered by charger transmitter coils 355, while other areas may not have charger transmitter coils 355.

With reference to FIG. 14, an example of a factory with known robotic AGV production routes is illustrated. In this example, a factory can include an assembly area 421 where components are assembled, a warehouse area 423 where components are stored before assembly and an AGV buffer area 425 where the AGVs 353 are stored when they are not needed. The common AGV paths 431 are illustrated. The charger transmitter coils 355 can be placed over areas having the most AGV traffic. High traffic movement areas of the AGV robots 353 and AGV assemblies 359 can be parallel to the assembly area 421 of a factory and at the entrance to the warehouse area 423. By knowing these AGV paths 431, the charger transmitter coils 355 can be placed in the factory which will result in the most efficient charging of the AGV batteries.

In some embodiments, software components or hardware switches might control switching on and off of particular charger transmitter coils 355 for the purpose of energy savings or in case of situations where an AGV 353 battery has been fully charged. For example, as discussed above, in an embodiment the battery level can be transmitted to an AGV control system or internal software of the AGV 353. The AGV control system can be configured to apply power to the charger transmitter coils 355 that are under AGVs that need battery recharging. However, if the AGV 353 battery is fully charged and it is desirable to avoid overcharging, the power may not be applied to the charger transmitter coils 355 under the AGV 353.

While the present invention has been described with use with two wheeled AGVs, in other embodiments, the described system and methods can be used with any AGV or other electrical vehicles such as human driven or driverless vehicles such as cars, buses, planes, vehicles that travel on tracks such as railroad cars, toys or any movable electrical equipment and tooling, etc. The present disclosure, in various embodiments, includes components, methods, processes, systems and/or apparatus substantially as depicted and described herein, including various embodiments, subcombinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. Rather, as the following claims reflect, inventive aspects lie in less than all features of any single foregoing disclosed embodiment.
Examples of the present disclosure are set out in the below numbered clauses:
1. A charging system comprising:
   a plurality of automatic guided vehicles (AGVs), each of the plurality of AGVs comprising a plurality of wheels coupled to a frame, a battery and a first receiver coil on a lower portion of the frame;
   a plurality of charging coils coupled to a power supply; and
   an AGV control system for controlling the movements of the plurality of AGVs;
   wherein the AGV control system is configured to direct each of the plurality of AGVs to adopt a position relative to at least one of the charging coils wherein the receiver coil is operable to receive electromagnetic waves emitted from the charging coils, wherein the receiver coils are configured to convert the received electromagnetic waves into electrical power for charging the batteries.
2. The charging system of clause 1 wherein the plurality of charging coils are adjacent to each other.
3. The charging system of clause 1 or 2 wherein the plurality of charging coils are on a raised charging surface.
4. The charging system of any preceding clause wherein each of the plurality of AGVs has two wheels.
5. The charging system of any preceding clause wherein each of the plurality of AGVs has a connection unit coupled to an upper center portion of each of the plurality of AGVs.
6. The charging system of any preceding clause wherein each of the plurality of AGVs has a battery management system for controlling the charging of the battery.
7. The charging system of any preceding clause wherein each of the plurality of AGVs includes a second receiver coil coupled to the first receiver coil and the first receiver coil and the second receiver coil are in a longitudinal configuration on each of the plurality of AGVs.
8. The charging system of any of clauses 1 to 6 wherein each of the plurality of AGVs includes a second receiver coil coupled to the first receiver coil and the first receiver coil and the second receiver coil are in a transverse configuration on each of the plurality of AGVs.
9. The charging system of any preceding clause wherein each of the plurality of AGVs includes a second receiver coil coupled in parallel to the first receiver coil.
10. The charging system of any of clauses 1 to 8 wherein each of the plurality of AGVs includes a second receiver coil coupled in series to the first receiver coil.
11. The charging system of any of clauses 1 to 8 wherein each of the plurality of AGVs includes a second receiver coil coupled to the first receiver coil in a series configuration and a third receiver coil coupled in series to a fourth receiver coil.
12. The charging system of any preceding clause wherein each of the plurality of charging coils is a spiral conductor mounted in a subframe.
13. The charging system of any preceding clause wherein each of the plurality of charging coils emits over 1 kW of electromagnetic power which is received by the receiver coil on each of the plurality of AGVs and converted into electrical power for charging the battery for each of the plurality of AGVs.
14. The charging system of any preceding clause wherein the plurality of AGVs are coupled together with linkages and each of the plurality of charging coils emits over 1 kW of electromagnetic power which is received by the receiver coil on each of the plurality of AGVs and converted into electrical power for charging the battery for each of the plurality of AGVs simultaneously.
15. The charging system of any preceding clause further comprising:
   a floor wherein a first portion of the floor includes the plurality of charging coils which are arranged in an array where the plurality of charging coils are adjacent to each other and a second portion of the floor does not include any of the plurality of charging coils.
16. The charging system of any preceding clause, wherein when the AGV adopts the position relative to at least one of the charging coils wherein the receiver coil is operable to receive electromagnetic waves emitted from the charging coils, at least part of the AGV is located over at least part of one or more charging coils.
17. The charging system of clause 16, wherein the receiver coil of the AGV is located over at least part of one or more charging coils.

## Claims

1. A charging system comprising:
a plurality of automatic guided vehicles (AGVs), each of the plurality of AGVs comprising a plurality of wheels coupled to a frame, a battery and a first receiver coil on a lower portion of the frame;
a plurality of charging coils coupled to a power supply; and
an AGV control system for controlling the movements of the plurality of AGVs;
wherein the AGV control system is configured to direct each of the plurality of AGVs to adopt a position relative to at least one of the charging coils wherein the receiver coil is operable to receive electromagnetic waves emitted from the charging coils, wherein the receiver coils are configured to convert the received electromagnetic waves into electrical power for charging the batteries.

2. The charging system of claim 1 wherein the plurality of charging coils are adjacent to each other.

3. The charging system of claim 1 or 2 wherein the plurality of charging coils are on a raised charging surface.

4. The charging system of any preceding claim wherein each of the plurality of AGVs has two wheels.

5. The charging system of any preceding claim wherein each of the plurality of AGVs has a connection unit coupled to an upper center portion of each of the plurality of AGVs.

6. The charging system of any preceding claim wherein each of the plurality of AGVs has a battery management system for controlling the charging of the battery.

7. The charging system of any preceding claim wherein each of the plurality of AGVs includes a second receiver coil coupled to the first receiver coil and the first receiver coil and the second receiver coil are in a longitudinal configuration on each of the plurality of AGVs.

8. The charging system of any of claims 1 to 6 wherein each of the plurality of AGVs includes a second receiver coil coupled to the first receiver coil and the first receiver coil and the second receiver coil are in a transverse configuration on each of the plurality of AGVs.

9. The charging system of any preceding claim wherein each of the plurality of AGVs includes a second receiver coil coupled in parallel to the first receiver coil or wherein each of the plurality of AGVs includes a second receiver coil coupled in series to the first receiver coil.

10. The charging system of any of claims 1 to 8 wherein each of the plurality of AGVs includes a second receiver coil coupled to the first receiver coil in a series configuration and a third receiver coil coupled in series to a fourth receiver coil.

11. The charging system of any preceding claim wherein each of the plurality of charging coils is a spiral conductor mounted in a subframe.

12. The charging system of any preceding claim wherein each of the plurality of charging coils emits over 1 kW of electromagnetic power which is received by the receiver coil on each of the plurality of AGVs and converted into electrical power for charging the battery for each of the plurality of AGVs.

13. The charging system of any preceding claim wherein the plurality of AGVs are coupled together with linkages and each of the plurality of charging coils emits over 1 kW of electromagnetic power which is received by the receiver coil on each of the plurality of AGVs and converted into electrical power for charging the battery for each of the plurality of AGVs simultaneously.

14. The charging system of any preceding claim further comprising:
a floor wherein a first portion of the floor includes the plurality of charging coils which are arranged in an array where the plurality of charging coils are adjacent to each other and a second portion of the floor does not include any of the plurality of charging coils.

15. The charging system of any preceding claim, wherein when the AGV adopts the position relative to at least one of the charging coils wherein the receiver coil is operable to receive electromagnetic waves emitted from the charging coils, at least part of the AGV is located over at least part of one or more charging coils, optionally wherein the receiver coil of the AGV is located over at least part of one or more charging coils.
